# EUROPÄISCHE PATENTANMELDUNG

(11) **EP 3 266 525 A1**
(43) Veröffentlichungstag der Anmeldung: **10.01.2018**
(21) Anmeldenummer: 17001040.9
(22) Anmeldetag: 21.06.2017
(51) Int. Cl.: B04B 5/12, F01M 13/04

(54) **ÖLABSCHEIDER FÜR EINE BRENNKRAFTMASCHINE**

(30) Priorität: 06.07.2016 DE 102016008299
(71) Anmelder: Neander Motors AG, 24143 Kiel (DE)
(72) Erfinder: Brüstle, Claus, D-74228 Nordheim (DE)

(57) **Zusammenfassung**

Dieser Ölabscheider ist für eine Brennkraftmaschine mit einem Nockenwellensystem gestaltet, über welchen Ölabscheider ein Medium, umfassend Ölpartikel angereicherte Durchblasgase, beeinflusst wird, dergestalt, dass die Ölpartikel und die Durchblasgase getrennt und einem Ölkreislauf bzw. einem Einlasssystem der Brennkraftmaschine zugeführt werden, wobei die Trennung der Ölpartikel von den Durchblasgasen durch Rotation des Nockenwellensystems erfolgt.

Um diesen Ölabscheider zu optimieren weist das Nockenwellensystem wenigstens eine Nockenwelle auf, an der eine als Ölabscheider wirkende Schleuderschaufeleinrichtung wirksam ist und dass die Schleuderschaufeleinrichtung die Ölpartikel des Mediums gegen relativ zu der Nockenwelle benachbarte und zum Ölkreislauf führende Gehäusewände fördert, wobei mittels der in einem Kurbelgehäuse der Brennkraftmaschine herrschenden Druckverhältnisse die von Ölpartikel befreiten Durchblasgase in das Einlasssystem geleitet werden.

## Beschreibung

Die Erfindung bezieht sich auf einen Ölabscheider für eine Brennkraftmaschine mit einem Nockenwellensystem, über welchen Ölabscheider ein Medium, umfassend Ölpartikel angereicherte Durchblasgase beeinflusst wird, nach dem Oberbegriff des Patentanspruchs 1.

Eine bekannte Brennkraftmaschine, DE 1 256 476, ist mit einer Einrichtung zur Kurbelgehäuseentlüftung und Abscheidung des in der Entlüftung mitgeführten Schmieröls sowie Rückführung diese Mediums in den Ölsumpf der Brennkraftmaschine versehen. Bei dieser Ausführung ist im Kurbelgehäuse ein sich im Wesentlichen über die Bauhöhe des Kurbelgehäuses erstreckender Abscheideraum vorgesehen ist. Dieser ist mit einem Kurbelraum über einen vom oberen Ende des Kurbelraums ausgehenden und nahe über dem Boden des Abscheideraums mündenden Einlassschacht verbunden. Ein Sumpf im Abscheideraum ist als Trockensumpf ausgebildet. Letzterer ist an eine Zahnradpumpe angeschlossen, die Nockenwellen-Zahnräder aufweist.

In der US 4,651,704 wird eine Entlüftungseinrichtung für einen Verbrennungsmotor behandelt, der über Nockenwellen verfügt. Eine axiale Bohrung in einer der Nockenwellen wird beim Betrieb der Brennkraftmaschine von Blow-By Medium - Durchblasgase- durchströmt. Dabei werden durch Zentrifugalkräfte tropfenartige Ölpartikel von den Durchblasgasen getrennt. Und Ölpartikel treten durch Radialbohrungen in den Nockenwelle aus und diese Durchblasgase werden durch den Systemdruck im Zylinderkopf bzw. Zylinderkurbelgehäuse mittels einer Leitung der Ansaugeinrichtung des Verbrennungsmotors zugeführt.

Aufgabe der Erfindung ist es, einen Ölabscheider für eine Brennkraftmaschine zu konzipieren, der sich leicht und wirtschaftlich günstig in ein Nockenwellensystem integrieren lässt und sich darüber hinaus durch eine gute Funktion auszeichnet.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile darin zu sehen, dass die als Ölabscheider wirkende Schleuderschaufeleinrichtung an wenigstens einer Nockenwelle des Nockenwellensystems wirkungsgerecht die Ölpartikel gegen benachbart von letzterem System sich erstreckenden Gehäusewandabschnitte beschleunigt, von wo aus besagte Ölpartikel in den Ölkreislauf geleitet werden. Und die von Ölpartikeln befreiten Durchblasgase werden auf ausgeklügelte Weise mittels der vom Kurbelgehäuse der Brennkraftmaschine ausgehenden Druckverhältnisse in das Einlasssystem gefördert. Die Schleuderschaufeinrichtung lässt sich vorbildlich durch ein Schaufelrad an der Nockenwelle des Nockenwellensystems umsetzen. Letzteres besitzt zwei parallele Nockenwellen, die jeweils mit einem Schaufelrad versehen ist, was auf bemerkenswerte Art und Weise zur Optimierung der Ölabscheidefunktion beiträgt.

Baulich und räumlich günstige Verhältnisse werden erreicht, wenn die Schaufelräder an Endbereichen der Nockenwellen angeordnet sind. Hervorzuheben in diesem Zusammenhang ist, dass die Schaufelräder benachbart wenigstens einer Begrenzungswand vorgesehen sind, wobei letztere im Bereich der Nockenwellen mit Durchgangsöffnungen versehen ist. Hierzu ist auch noch positiv zu erwähnen, dass die Nockenwellen aufrecht stehen und ihre Endbereiche Nahe eine Oberseite der Brennkraftmaschine liegen, wobei oberhalb der mit den Durchgangsöffnungen versehenen Begrenzungswand der mit dem Einlasssystem verbundene Raum zur Entsorgung der von Ölpartikeln befreiten Durchblasgasen ausgebildet ist. Dieser Raum ist auf einfache konstruktive Art mittels eines trogförmigen Deckels geschlossen, der mit einem Anschlussstutzen für das Einlasssystem versehen ist. Eine sinnreiche Lösung ist, dass auf der vom Raum entfernt liegenden Seite die Schaufelräder an den Nockenwellen Zahnräder festgesetzt sind, die z.B. gegenseitig im Eingriff stehen. Beispiel gebend ist zum einen, dass jedes Schaufelrad ein mit einer Aufnahmebohrung für einen Lagerzapfenabschnitt der Nockenwelle versehenes scheibenartiges Ringteil mit einer oder mehreren Durchgangsöffnungen aufweist und zum anderen dass das Schaufelrad unter Vermittlung von axial wirkenden, diese Durchgangsöffnungen im Ringteil durchdringenden Schrauben am Zahnrad der Nockenwelle gehalten wird. Ergänzt wird diese Lösung dadurch, dass einerseits jedes Schaufelrad am Umfang des Ringteils eine Vielzahl gleichmäßig verteilte Schaufeln umfasst, die sich in axialer Richtung zur Begrenzungswand hin erstrecken und andererseits die axialen Schaufeln eine rechteckige Form aufweisen,

Schließlich werden Maßstäbe gesetzt, wenn das Ringteil und die Schaufeln aus einem Stück hergestellt sind und wenn das Schaufelrad aus Kunststoff, Leichtmetall, Stahl oder dgl. besteht, wobei besagtes Schaufelrad aus Nylon besteht und im Spritzgussverfahren hergestellt ist.

In der Zeichnung wird ein Ausführungsbeispiel der Erfindung gezeigt, das nachstehend näher beschrieben ist.

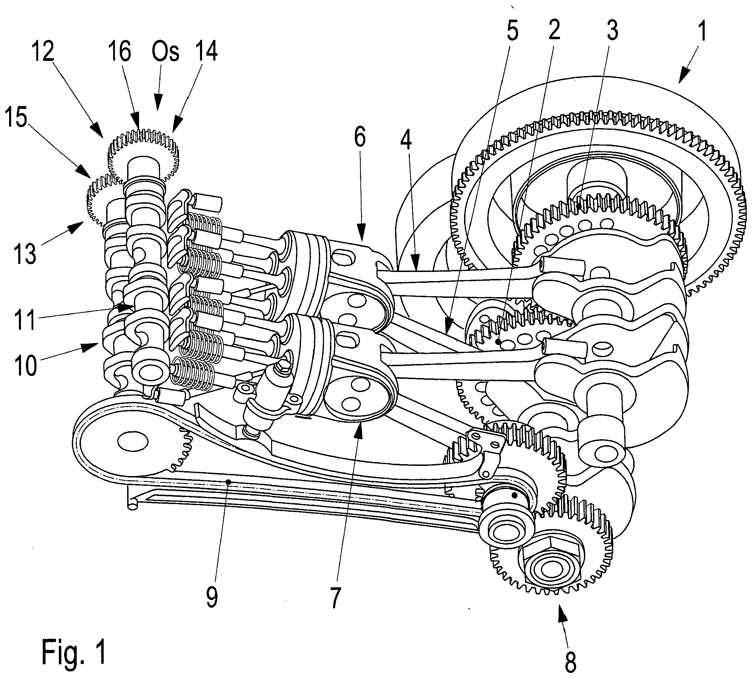

Es zeigen
Fig. 1 eine schematisch dargestellte Brennkraftmaschine mit zwei Kurbelwellen und einem zwei Nockenwellen umfassenden Nockenwellensystem,
Fig. 2 einen Teilschnitt der Brennkraftmaschine mit einem Ölabscheider im Bereich von Endbereichen der Nockenwellen, und zwar benachbart einer Oberseite der Brennkraftmaschine, nach Fig. 1,
Fig. 3 eine Schrägansicht auf die Endbereiche der Nockenwellen mit den Ölabscheider nach Fig. 2 bildenden Schaufelrädern,
Fig. 4 eine Einzelteil-Schrägansicht auf die Schaufelräder nach Fig. 3,

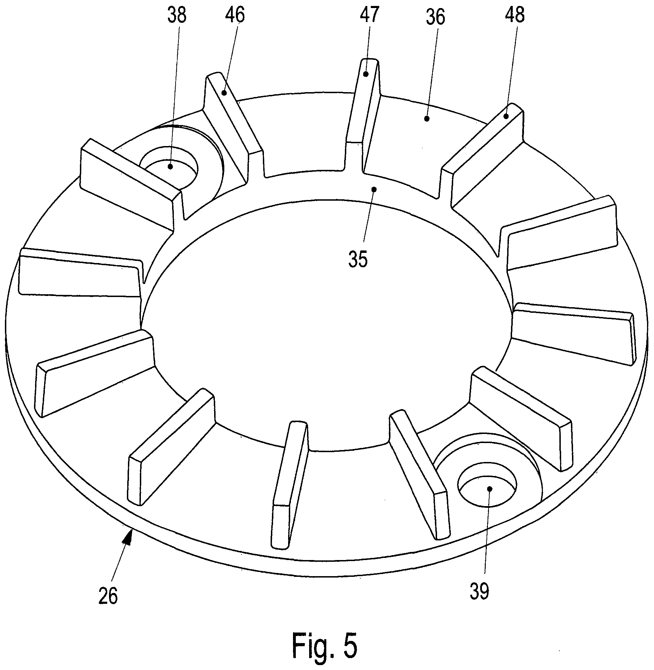

Fig. 5 eine Schrägansicht auf eines der Schaufelräder nach Fig. 4.

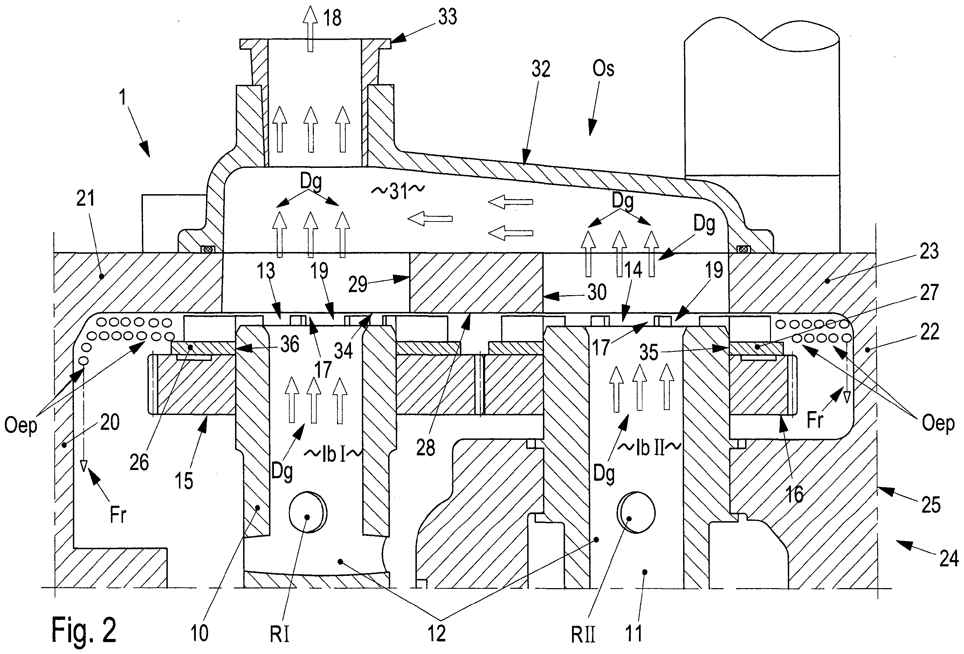

Eine Brennkraftmaschine 1 dient zum Antrieb von Wasser-, Landfahrzeugen oder dgl. und arbeitet im Dieselverfahren mit Direkteinspritzung, wobei zur Betriebsoptimierung eine Abgasturboladereinrichtung vorgesehen ist. Zwei parallele aufrecht verlaufende Kurbelwellen 2 und 3 werden über jeweils zwei Pleuel 4 und 5 eines von zwei Kolben 6 und 7 angetrieben. Eine der Kurbelwellen z.B. 2 beeinflusst ein Stirnradgetriebe 8, das unter Zwischenschaltung eines Endlostriebs 9 eine von zwei parallelen ebenfalls aufrecht ausgerichteten Nockenwellen 10 und 11 eines Nockenwellensystems 12. Die mit axialen Innenbohrungen Ibl und IbII Radialbohrungen RI und RII versehenen Nockenwellen 10 und 11 wirken an Endbereichen 13 und 14 über zwei in gegenseitigem Eingriff stehenden Zahnrädern 15 und 16 zusammen -Fig. 2-, die kraftschlüssig z.B. durch Aufschrumpfen mit diesen Nockenwellen 10 und 11 verbunden sind. Nähere Details betreffend die vorstehende sogenannte Doppelkurbelwellen-Brennkraftmaschine 1 sind in der EP 2 696 054 A1 beschrieben.

Die Brennkraftmaschine 1 verfügt über einen Ölabscheider 17, durch den ein Medium, umfassend Ölpartikel angereicherte Durchblasgase, auch als Blow-By-Gase bezeichnet, behandelt wird. Dabei werden die Ölpartikel Oep und die Durchblasgase Dg -Fig.2- weitreichend voneinander getrennt und als eine Art Film Fi einem Ölkreislauf bzw. einem mit Brennräumen zur Aufnahme von Luft/Kraftstoff verbundenen -letzteres ist nicht dargestellt- Einlasssystem 18 zugeführt. Die Trennung der Ölpartikel von den Durchblasgasen Dg erfolgt durch Rotation des Nockenwellensystems 12. Jedoch auch über die Innenbohrungen IbI und IbII der Nockenwellen 10 und 11 strömen von Ölpartikel entsorgte Durchblasgase Dg in das Einlassystem 18.

An wenigstens einer der Nockenwellen z. B. 10 ist eine Schleuderschaufeleinrichtung 19 wirksam, die die Ölpartikel des zu behandelnden Mediums gegen relativ zu besagter Nockenwelle 10 benachbarten und zum Ölkreislauf führenden Gehäusewandabschnitte 20, 21 und 22, 23 einer Maschinengehäusestruktur 24 bspw. eines Zylinderkopfs 25 der Brennkraftmaschine 1. Anders ausgedrückt: Die gegen die Gehäusewandabschnitte 20, 21 und 22, 23 geschleuderten tropfenartigen

Ölpartikel Oep entspannen sich an besagten Gehäusewandabschnitten und gleiten, wie bereits erwähnt als Fim Fi in Richtung Ölkreislauf bzw. Ölwanne der Brennkraftmaschine 1. Und mittels der in einem nicht gezeigten Kurbelgehäuse herrschenden Druckverhältnisse werden die von Ölpartikeln OeP befreiten Durchblasgase Dg in das Einlasssystem 18 geleitet -Fig.2- . Die Schleuderschaufeleinrichtung 19 umfasst ein Schaufelrad 26, das mit der Nockenwelle 10 drehfest vebunden ist. Bei dem Nockenwellensystem 12, das ja zwei Nockenwellen, nämlich 10 und 11 besitzt, sind an beiden besagten Nockenwellen 10 und 11 Schaufelräder vorgesehen, und zwar das Schaufelrad 26 an der Nockenwelle 10 und ein Schaufelrad 27 an der Nockenwelle 11.

Die Schaufelräder 26 und 27 sind in der Nähe der Endbereiche 13 und 14 der Nockenwellen 10 und 11 befestigt, und die Schaufelräder 26 und 27 verlaufen benachbart einer quer zu den Nockenwellen 10 und 11 ausgerichteten Begrenzungswand 28 des Zylinderkopfs 25, die die Gehäusewandabschnitte 21 und 22 bildet. Die Begrenzungswand 28 des Zylinderkopfs 25 ist im Bereich der Nockenwellen 10 und 11 mit bohrungsartigen Durchgangsöffnungen 29 und 30 versehen.

Die, wie vorstehend beschrieben, aufrecht in der Brennkraftmaschine 1 stehenden Nockenwellen 10 und 11 liegen mit ihren Endbereichen 13 und 14 in der Nähe einer Oberseite Os dieser Brennkraftmaschine 1. Oberhalb der mit den Durchgangsöffnungen 29 und 30 versehene Begrenzungswand 28 des Zylinderkopfs 25 ist ein Raum 31 zur Entsorgung der von den Ölpartikeln Oep befreiten Durchblasgase Dg ausgebildet. Der Raum 31 ist unter Vermittlung einer z.B. im Querschnitt trogförmigen Haube 32 abgedeckt, die mit einem zum Einlasssystem 18 führenden Anschlussstutzen 33 versehen ist.

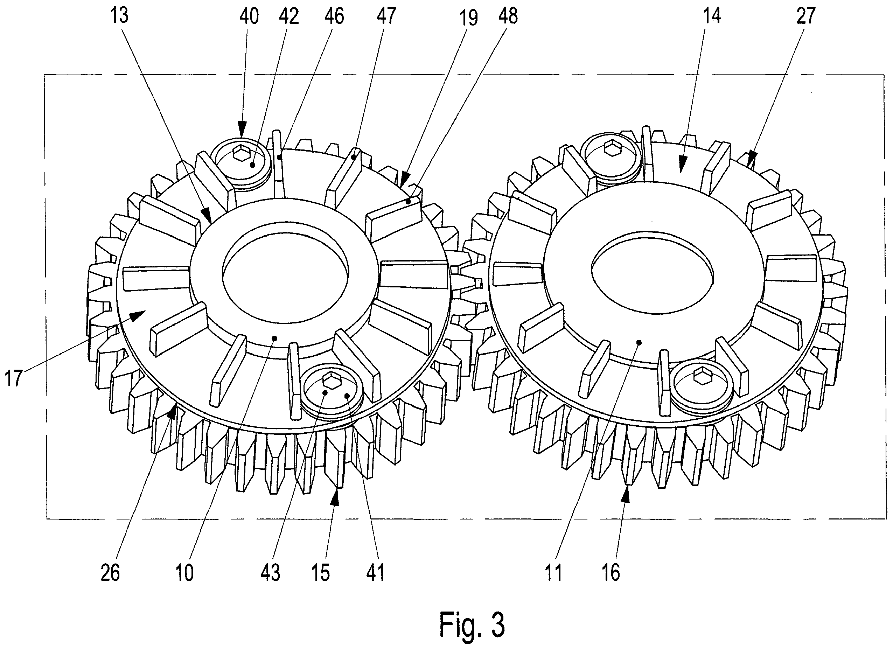

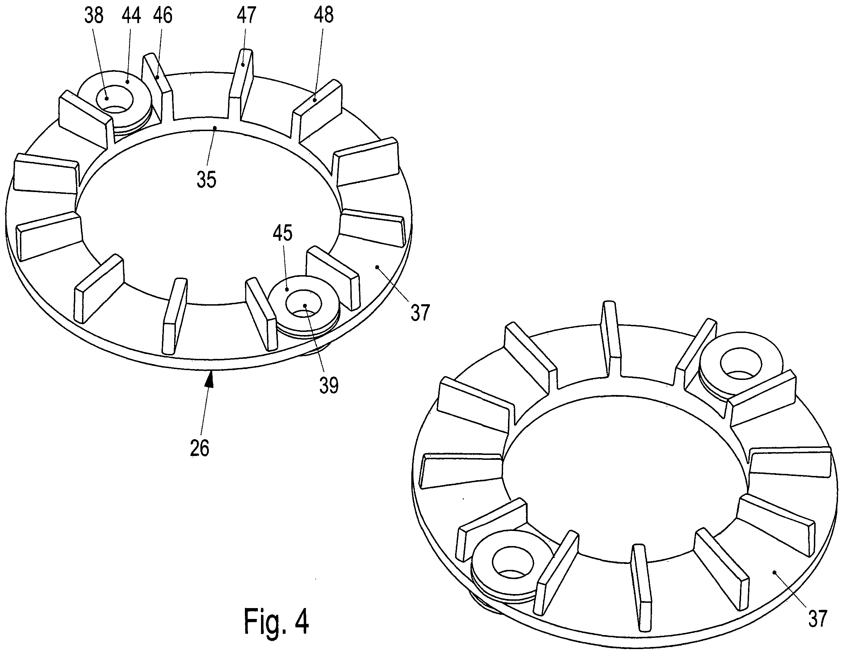

Auf einer von dem Raum 31 abgewandten Seite 34 der Begrenzungswand 28 liegen die Schaufelräder 26 und 27 an den Nockenwellen 10 und 11 Zahnrädern 15 und 16 an, die z.B. gegenseitig in Eingriff -Fig. 3- stehen und an denen die Schaufelräder 26 und 27 in Lage gehalten werden. Jedes Schaufelrad bspw. 26 weist ein mit einer Aufnahmebohrung 35 für einen Lagerzapfenabschnitt 36 -Fig. 2-- der Nockenwelle 11 versehenes scheibenartiges Ringteil 37 -Fig. 4- auf, in das ein oder mehrere Durchgangsbohrungen 38 und 39 eingearbeitet sind. Die Schaufelräder 26 und 27 sind unter Vermittlung von wirkenden, die besagten Durchgangsbohrungen 38 und 39 durchdringenden Schrauben 40 und 41 mit Schraubenköpfen 42 und 43 an den Zahnrädern 15 und 16 befestigt -Fig. 3- . Im Bereich der Schraubenköpfe 42 und 43 sind am Ringteil 37 Stützscheiben 44 und 45 für diese Schraubenköpfe vorgesehen.

Am Umfang des Ringteils 37 des Schaufelrads 26 gleichmäßig verteilt sind eine Vielzahl von z.B. zwölf Schaufeln 45, 46 47 usw. Fig. 3 und 4- vorgesehen, die sich in axialer Richtung, und zwar zur Begrenzungswand 28 hin erstrecken. Diese axialen Schaufeln 45, 46 und 47 usw. weisen eine rechteckige ebene Form auf. Denkbar ist aber auch, Schaufeln einzusetzen, die eine gewölbte -konkave oder konvexe- Form aufweisen. Das Ringteil 37 und die Schaufeln 45, 46, 47 usw. sind aus einem Stück hergestellt; wobei Kunststoff, Leichtmetall, Stahl oder dgl. für die Herstellung der Schaufelräder 26 und 27 besonders geeignet sind. Schließlich haben im Zuge der Entwicklung der Schaufelräder 26 und 27 Überlegungen dazu geführt, dass der Werkstoff Nylon, verarbeitet im Spritzgussverfahren, über gute Eigenschaften für diesen Anwendungsfall verfügt.

## Patentansprüche

1. Ölabscheider für eine Brennkraftmaschine mit einem Nockenwellensystem, über welchen Ölabscheider ein Medium, umfassend Ölpartikel angereicherte Durchblasgase, beeinflusst wird, dergestalt, dass die Ölpartikel und die Durchblasgase getrennt und einem Ölkreislauf bzw. einem Einlasssystem der Brennkraftmaschine zugeführt werden, wobei die Trennung der Ölpartikel von den Durchblasgasen durch Rotation des Nockenwellensystems erfolgt, **dadurch gekennzeichnet, dass** das Nockenwellensystem (12) wenigstens eine Nockenwelle (z.B. 10) aufweist, an der eine als Ölabscheider (17) wirkende Schleuderschaufeleinrichtung (19) wirksam ist und dass die Schleuderschaufeleinrichtung (19) die Ölpartikel (Oep) des Mediums gegen relativ zu der Nockenwelle (10) benachbarte und zum Ölkreislauf führende Gehäusewandabschnitte (20, 21 und 22, 23) fördert, wobei mittels der in einem Kurbelgehäuse der Brennkraftmaschine (1) herrschenden Druckverhältnisse die von Ölpartikel (Oep) befreiten Durchblasgase in das Einlasssystem (18) geleitet werden.

2. Ölabscheider nach Anspruch 1, **dadurch gekennzeichnet, dass** die Schleuderschaufeleinrichtung (19) ein Schaufelrad (26) umfasst, das mit der Nockenwelle (10) drehfest verbunden ist.

3. Ölabscheider nach den Ansprüchen 1 und 2, **dadurch gekennzeichnet, dass** das Nockenwellensystem (12) zwei parallele Nockenwellen (10 und 11) besitzt, die jeweils mit einem Schaufelrad (26 und 27) verbunden sind.

4. Ölabscheider nach den Ansprüchen 1 und 3, **dadurch gekennzeichnet, dass** die Schaufelräder (26 und 27) an Endbereichen (13 und 14) der Nockenwellen (10 und 11) angeordnet sind.

5. Ölabscheider nach Anspruch 4, **dadurch gekennzeichnet, dass** die Schaufelräder (26 und 27) benachbart wenigsten einer Begrenzungswand (28) eines Zylinderkopfs (25) angeordnet sind, welche Begrenzungswand (28) im Bereich der Nockenwellen (10 und 11) mit Durchgangsöffnungen (29 und 30) versehen ist.

6. Ölabscheider nach den Ansprüchen 1, 3, 4 und 5, **dadurch gekennzeichnet, dass** die Nockenwellen (10 und 11) aufrecht stehen und ihre Endbereiche (13 und 14) Nahe einer Oberseite (Os) der Brennkraftmaschine (1) liegen, wobei oberhalb der mit den Durchgangsöffnungen (29 und 30) versehenen Begrenzungswand (28) ein mit dem Einlasssystem (18) verbundener Raum (31) zur Entsorgung der von Ölpartikeln (Oep) befreiten Durchblasgase (Dg) ausgebildet ist.

7. Ölabscheider nach den Ansprüchen 1 und 6, **dadurch gekennzeichnet, dass** der Raum (31) von einer z.B. trogfömigen Haube (32) überwölbt wird, die mit einem Anschlussstutzen (33) für das Einlasssystem (18) versehen ist.

8. Ölabscheider nach Anspruch 5 und 6, **dadurch gekennzeichnet, dass** auf einer von dem Raum (31) abgewandten Seite (34) der Begrenzungswand (28) die Schaufelräder (26 und 27) an den Nockenwellen (10 und 11) Zahnräder (15 und 16) anliegen, die z.B. gegenseitig im Eingriff stehen und an denen die Schaufelräder (26 und 27) in Lage gehalten werden.

9. Ölabscheider nach Anspruch 8, **dadurch gekennzeichnet, dass** jedes Schaufelrad (z.B. 26) ein mit einer Aufnahmebohrung (35) für einen Lagerzapfenabschnitt (36) der Nockenwelle (z.B. 10) versehenes Ringteil (37) mit ein oder mehreren Durchgangsöffnungen (38 und 39) aufweist.

10. Ölabscheider nach den Ansprüchen 8 und 9, **dadurch gekennzeichnet, dass** das Schaufelrad (z.B. 26) unter Vermittlung von axial wirkenden Schrauben (40 und 41) gehalten wird, die an gegenüberliegenden Abschnitten des Ringteils (37) die Durchgangsöffnungen (38 und 39) durchdringen, wobei das Schaufelrad (z.B. 26) an dem zugehörigen Zahnrad (15) der Nockenwelle (10) gehalten ist.

11. Ölabscheider nach den Ansprüchen 1, 2, 5, 6, 8 und 10, **dadurch gekennzeichnet, dass** jedes Schaufelrad (z.B. 26) eine Vielzahl am Umfang des Ringteils (37) verteilte Schaufeln (46, 47, 48 usw.) umfasst, die sich in axialer Richtung zur Begrenzungswand (28) hin erstrecken.

12. Ölabscheider nach Anspruch 11, **dadurch gekennzeichnet, dass** die axialen Schaufeln (46, 47 und 48) eine rechteckige Form aufweisen.

13. Ölabscheider nach den Ansprüchen 11 und 12, **dadurch gekennzeichnet, dass** das Ringteil (37) und die Schaufeln (46, 47 und 48) des Schaufelrads (z.B. 26) aus einem Stück hergestellt sind.

14. Ölabscheider nach Anspruch 13, **dadurch gekennzeichnet, dass** jedes Schaufelrad (z.B. 26) aus Kunststoff, Leichtmetall, Stahl oder dgl. besteht.

15. Ölabscheider nach Anspruch 14, **dadurch gekennzeichnet, dass** das Schaufelrad (z.B. 26) aus Nylon besteht und im Spritzgussverfahren hergestellt ist.
